# EUROPEAN PATENT APPLICATION

(11) **EP 4 506 849 A1**
(43) Date of publication of application: **12.02.2025**
(21) Application number: 24742811.3
(22) Date of filing: 18.06.2024
(51) Int. Cl.: G06F 40/151, G06F 40/18, G06F 40/103, G06F 16/31, G06F 16/34, G06F 11/30

(54) **DOCUMENT CONVERSION SYSTEM AND METHOD FOR MANAGING ELECTRONIC TEST REPORT**

(30) Priority: 20.06.2023 KR 20230079239
(71) Applicant: QCI Co., Ltd, Changwon-si, Gyeongsangnam-do 51573 (KR)
(72) Inventor: CHOI, Chang Ho, Gyeonggi-do 10543 (KR)
(74) Representative: M. Zardi & Co S.A.
(86) International application number: PCT/KR2024/008380
(87) International publication number: WO 2024/262904

(57) **Abstract**

The present disclosure relates to a document conversion system and method for electronic test report management to easily and quickly report data generated from a measuring device to an Excel test report. The present disclosure may include a data input unit into which data generated from a measuring device is input; a data storage unit that stores the data that is input into the data input unit in a database; a measurement item list generation unit that generates a measurement item list by calling data stored in the database; a test report generation unit that calls an Excel test report for mapping to the measuring item list generated by the measurement item list generation unit; a mapping unit that maps data called by the measurement item list generation unit to cells on the Excel test report called by the test report generation unit; and a test report storage unit that stores the Excel test report mapped through the mapping unit.

## Description

### TECHNICAL FIELD

The present disclosure relates to a document conversion system and method for electronic test report management, and more particularly, to a document conversion system and method for electronic test report management to easily and quickly report data generated from a measuring device to an Excel test report.

### BACKGROUND ART

In these days, with the rapid development of various technologies, new products are rapidly emerging in various fields such as mobile communications, electrical and electronics, semiconductors, medicine, biotechnology, and programming, and along with such an increase in industrial technologies, there is a demand for advancement of testing and certification technology and certification result management technology for the relevant technology and products.

The advancement of testing and certification technology for products not only strengthens the international technological competitiveness of the relevant product, but is also directly related to securing public safety and reliability. Accordingly, there may be a method of achieving technological advancement through improving the authentication accuracy of testing and certification technology, and the technical advancement may also be achieved through improvements in a method of more efficiently and easily managing test reports based on the results of testing and certification technology.

In particular, measurement data generated from a three-dimensional measuring device is output in a unique format determined by each software used by the measuring instrument manufacturer, depending on the measuring device manufacturer. In this case, data that is output as a file according to a unique format must go through a process of storing the data in a database to write test reports, or writing individual test reports using a macro, and the like.

Those test reports must be managed differently depending on contractors, and the management of test reports in different formats may be necessary for each production part.

### DISCLOSURE OF INVENTION

### TECHNICAL PROBLEM

Therefore, the present disclosure has been proposed to improve such problems in the related art, and an aspect of the present disclosure is to provide a new type of document conversion system and method for electronic test report management to easily and quickly report data generated from a measuring device to an Excel test report.

In particular, an aspect of the present disclosure is to provide a new type of document conversion system and method for electronic test report management capable of recognizing data in various formats generated from a three-dimensional measuring device to input the data into a database, and calling the data from the database to allow a user to directly designate and input the data into his or her desired cells on an Excel test report.

### TECHNICAL SOLUTION

In order to achieve the foregoing objectives, according to an aspect of the present disclosure, there is provided a document conversion system for electronic test report management, the system including a data input unit into which data generated from a measuring device is input; a data storage unit that stores the data that is input into the data input unit in a database; a measurement item list generation unit that generates a measurement item list by calling data stored in the database; a test report generation unit that calls an Excel test report for mapping to the measuring item list generated by the measurement item list generation unit; a mapping unit that maps data called by the measurement item list generation unit to cells on the Excel test report called by the test report generation unit; and a test report storage unit that stores the Excel test report mapped through the mapping unit.

In such a document conversion system for electronic test report management according to the present disclosure, the mapping unit may include a cell setting section that maps values of the measurement item list to cells of the Excel test report; and a cell output section that outputs the values of the measurement item list mapped by the cell setting section onto the Excel test report.

Furthermore, in the document conversion system for electronic test report management according to the present disclosure, the cell setting section may include a single cell designation section that individually maps the values of the measurement item list to the cells on the Excel test report; a range designation section provided to designate a cell range on the Excel test report to map the values of the measurement item list; and a manual designation section provided to directly input cell coordinates on the Excel test report to map the values of the measurement item list thereto.

In addition, in the document conversion system for electronic test report management according to the present disclosure, the range designation section may set the output direction and number of the cells on the Excel test report.

In such a document conversion system for electronic test report management according to the present disclosure, the cell output section, when outputting the values of the measurement item list mapped by the cell setting section onto the Excel test report, may set and output an output direction of the cells on the Excel test report and a number of the cells selected based on the set direction.

Furthermore, in the document conversion system for electronic test report management according to the present disclosure, the cell output section may include a mapping cell output section that outputs the values of the measurement item list mapped by the cell setting section onto the Excel test report; and an automatic cell output section that outputs the entire measurement item list generated by the measurement item list generation unit onto the Excel test report.

In addition, in the document conversion system for electronic test report management according to the present disclosure, the cell output section may include an output storage section that stores the measurement item list that is output by the mapping cell output section or the automatic cell output section on the Excel test report.

In such a document conversion system for electronic test report management according to the present disclosure, the measurement item list generation unit may chart the measurement item list imported from the database.

Furthermore, a document conversion method for electronic test report management may include a data storage step of storing data generated by a measuring device in a database; a data call step of calling data stored in the database; an Excel test report call step of calling an Excel test report written as a test report; a mapping step of mapping between the data and the Excel test report, which are called in the data call step and the Excel test report call step; and a step of storing the mapped data and Excel test report in the mapping step.

In addition, in the document conversion method for electronic test report management according to the present disclosure, the mapping step may include a cell mapping step of mapping between data and an Excel test report by a cell setting section including a single cell designation section that individually maps the data to cells on the Excel test report, a range designation section provided to designate a cell range on the Excel test report to map the data, and a manual designation section provided to map the data on the Excel report by directly inputting cell coordinates; and a cell output step of outputting and storing the mapped data and Excel test report through a cell output section including a mapping cell output section that outputs the data mapped by the cell setting section onto the Excel test report and an automatic cell output section that outputs the data onto the Excel test report.

### ADVANTAGEOUS EFFECTS

As described above, according to a document conversion system and method for electronic test report management according to the present disclosure, there is an effect of easily and quickly reporting data generated from a measuring device to an Excel test report.

In particular, data in various formats generated from a three-dimensional measuring device may be recognized to input the data into a database, and the data from the database may be called to allow a user to directly designate and input the data into his or her desired cells on an Excel test report, thereby providing an effective data management system.

In addition, it is configured to allow one-to-one mapping between a measurement item list and cells on an Excel test report to minimize confusion on data mapping and easily change settings through simple remapping even when cells are added or deleted, or their locations are moved, thereby providing convenience in use.

Furthermore, a measurement item list imported from a database may be provided in a chart, thereby having an effect capable of effectively managing the lifespan and replacement cycle of the tools of the measuring device.

### BRIEF DESCRIPTION OF THE DRAWINGS

FIG. 1 is a block diagram showing the elements of a document conversion system for electronic test report management according to a preferred embodiment of the present disclosure.
FIG. 2 is a block diagram showing the elements of a mapping unit in a document conversion system for electronic test report management according to a preferred embodiment of the present disclosure.
FIG. 3 is a block diagram showing a document conversion method for electronic test report management according to a preferred embodiment of the present disclosure.
FIG. 4 is a view showing a main screen of a program for building a document conversion system for electronic test report management according to a preferred embodiment of the present disclosure.
FIGS. 5 to 8 are views for explaining a plurality of icons formed on a main screen of a program for building a document conversion system for electronic test report management according to a preferred embodiment of the present disclosure.
FIGS. 9 and 10 are views for explaining a basic mapping method using a program for building a document conversion system for electronic test report management according to a preferred embodiment of the present disclosure.
FIGS. 11 to 18 are views specifically showing a mapping method using a program for building a document conversion system for electronic test report management according to a preferred embodiment of the present disclosure.

### <Description of Symbols>

100: Document conversion system for electronic test report management
200: Data input unit
300: Data storage unit
400: Measurement item list generation unit
500: Test report generation unit
600: Mapping unit
610: Cell setting section 611: Single cell designation section
612: Range designation section 613: Manual designation section
620: Cell output section 621: Mapping cell output section
622: Automatic cell output section 623: Output storage section
700: Test report storage unit

### BEST MODE FOR CARRYING OUT THE INVENTION

Advantages and features of the present disclosure, and methods of accomplishing the same will be clearly understood with reference to the following embodiments described below in detail in conjunction with the accompanying drawings.

However, the present disclosure is not limited to those embodiments disclosed below but may be implemented in various different forms. It should be noted that the present embodiments are merely provided to make a full disclosure of the invention and also to allow those skilled in the art to know the full range of the invention, and therefore, the present disclosure is to be defined only by the scope of the appended claims.

In addition, it should be noted that the terms used herein are merely used to describe the embodiments, but not to limit the present disclosure.

In this specification, unless clearly used otherwise, expressions in a singular form include a plural form. As used herein, the terms "comprises" and/or "comprising" do not preclude the presence or addition of elements other than the mentioned elements.

Unless otherwise defined, all terms (including technical and scientific terms) used in this specification may be used with meanings that can be commonly understood by those skilled in the art to which the present disclosure pertains.

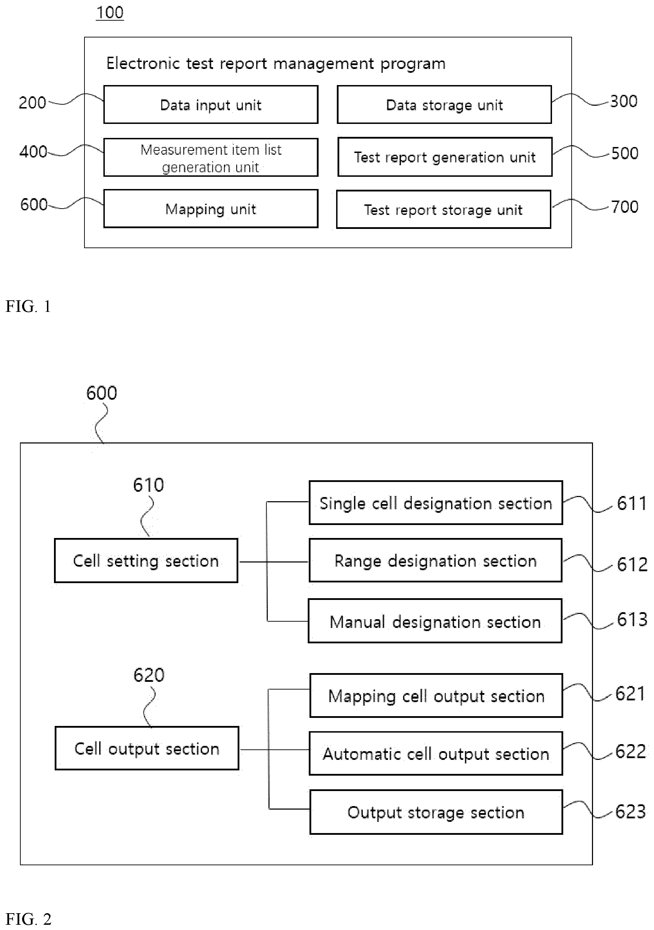

Hereinafter, preferred embodiments of the present disclosure will be described in detail with reference to the accompanying drawings, and elements performing the same function in FIGS. 1 to 18 will be given the same reference numerals.

Meanwhile, in the illustration and detailed description of the drawings, the detailed description and illustration of specific technical configurations and operations of elements that are not directly related to the technical features of the present disclosure have been omitted, and only the technical configurations related to the present disclosure have been briefly illustrated or described.

Referring to FIGS. 1 and 2, a document conversion system 100 for electronic test report management according to a preferred embodiment of the present disclosure includes a data input unit 200, a data storage unit 300, a measurement item list generation unit 400, a test report generation unit 500, a mapping unit 600, and a test report storage unit 700.

Meanwhile, the document conversion system 100 for electronic test report management may be provided by an electronic test report management program implemented inside a computer of a test report writer, and specifically, arranged in the form of a program such that respective component parts perform detailed program functions.

The document conversion system 100 for electronic test report management according to a preferred embodiment of the present disclosure may be largely divided into a component for collecting data, a component for mapping a test report, and a component for outputting a test report.

The component for collecting data includes a data input unit 200, a data storage unit 300, and a measurement item list generation unit 400.

Furthermore, the component for mapping a test report includes a test report generation unit 500 and a mapping unit 600.

Lastly, the component for outputting a test report includes a test report storage unit 700.

Next, the component for collecting data will be described.

The data input unit 200 receives data generated from a measuring device.

Furthermore, the data input unit 200 may receive result data including a plurality of result items generated from the measurement device and a plurality of data corresponding to the result items.

Here, the result data generated from the measuring device is generated in various formats. In this case, when the result data in various formats is formed in any one of DOCX, DOC, RTF, XLSX, XLS, CSV, TXT, and HTML, it is converted into a TXT format and received by the data input unit 200.

Meanwhile, the measuring device is preferably a three-dimensional measuring device, but data may also be generated through a two-dimensional measuring device.

For such a measuring device, a ZEISS measuring device, a Mitutoyo measuring device, or a Hexagon measuring device may, preferably, be used, but this is only an example, and it will be well understood by those skilled in the art that various modifications and changes can be made without departing from the technical concept of the present disclosure.

Furthermore, the data storage unit 300 stores the data that is input into the data input unit 200 in a database.

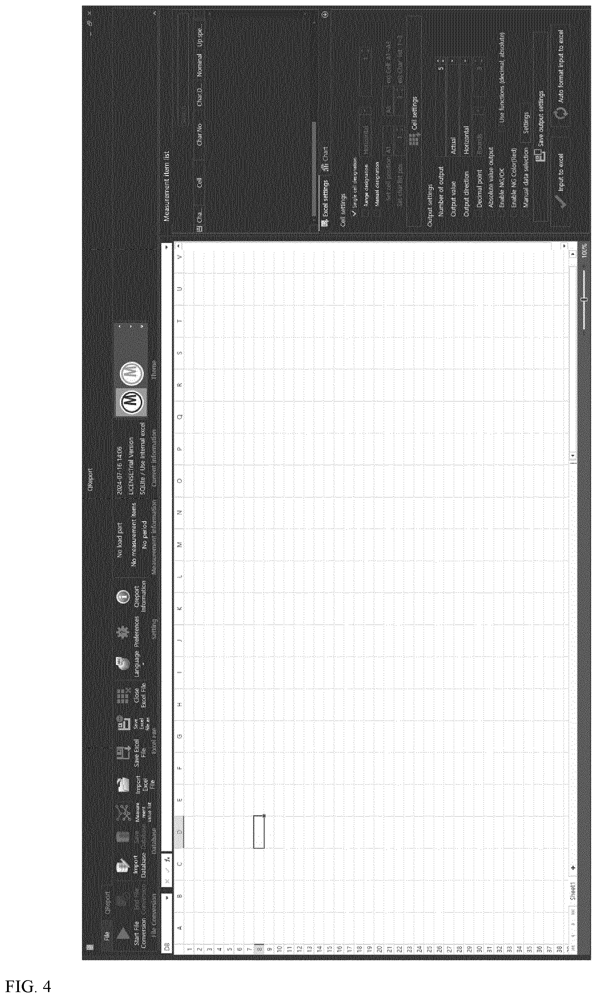

The result data received by the data input unit 200 is stored in the database when a file conversion start icon is clicked as shown in FIG. 4.

Here, if file conversion is successfully made, then the converted file will be saved in an OK folder in a backup folder of the database, and if the conversion fails, then it will be saved in a FAIL folder in the backup folder.

Furthermore, the measurement item list generation unit 400 calls data stored in the database to generate a measurement item list.

In the measurement item list, when data stored in the database is selected, the data stored in the database, that is, the measurement item, may be confirmed from the measurement item list.

Additionally, the measurement item list may include a cell location, a number of items, an item description, a reference value, and the like.

However, the cell location in the measurement item list is displayed in a non-selected state.

In this case, the measurement item list generation unit 400 charts the measurement item list imported from the database.

In this manner, the lifespan and replacement cycle of the tools of the measuring device can be effectively managed by providing the measurement item list imported from the database in a chart.

Next, a component for mapping a test report will be described.

The component for mapping a test report includes a test report generation unit 500 and a mapping unit 600.

The test report generation unit 500 calls an Excel test report for mapping to a measurement item list generated by the measurement item list generation unit 400.

Furthermore, the mapping unit 600 maps data called by the measurement item list generation unit to cells on the Excel test report called by the test report generation unit 500.

Next, the mapping unit 600 may include a cell setting section 610 that maps the values of the measurement item list to the cells of the Excel test report, and a cell output section 620 that outputs the values of the measurement item list mapped by the cell setting section 610 onto the Excel test report.

Here, the cell setting section 610 sets the cell location of the measurement item list to be the same as the cell location on the Excel test report.

More specifically, the cell setting section 610 includes a single cell designation section 611, a range designation section 612, and a manual designation section 613.

First, the single cell designation section 611 individually maps the values of the measurement item list to cells on an Excel test report.

Furthermore, in consideration of a component for mapping through the single cell designation section 611, when a cell on the Excel test report is designated and a cell location on the measurement item list is designated through the single cell designation section 611, the cell location of the measurement item list is displayed at a location corresponding to the cell on the Excel test report, and the cell on the Excel test report and a value of the measurement item list are mapped to each other in a corresponding manner.

In addition, the range designation section 612 is used to designate a cell range on the Excel test report to map the values of the measurement item list thereto.

In particular, the range designation section 612 may set the output direction and number of cells on the Excel test report.

In consideration of a component for mapping through the range designation section 612, a horizontal or vertical direction is set, and a number of cells selected according to the set direction is set.

In this manner, as the number of cells is set, the cell location of the measurement item list is displayed at a location corresponding to the cell on the Excel test report, and the cell on the Excel test report and a value of the measurement item list are mapped to each other in a corresponding manner.

Next, the manual designation section 613 is used to directly input cell coordinates on the Excel test report and map the values of the measurement item list thereto.

In consideration of a component for mapping through the manual designation section 613, the manual designation section directly inputs a cell location, that is, coordinates, on the Excel test report to map a cell location value of the measurement item list to the cell location on the Excel test report in a corresponding manner.

Meanwhile, the specific mapping configuration of the cell setting section 610 will be described in detail later.

Furthermore, the cell output section 620 is used to output the values of the measurement item list mapped by the cell setting section 610 onto an Excel test report.

That is, when a cell location on the measurement item list is set by the cell setting section 610, the measurement item list is output onto the Excel test report.

In this case, the cell output section 620, when outputting the values of the measurement item list mapped by the cell setting section 610 onto the Excel test report, sets and outputs the output direction of cells on the Excel report and the number of cells selected along the set direction.

The cell output section 620 includes a mapping cell output section 621, an automatic cell output section 622, and an output storage section 623.

In particular, the mapping cell output section 621 outputs the values of the measurement item list mapped by the cell setting section 610 onto an Excel test report.

Furthermore, the automatic cell output section 622 outputs an entire measurement item list generated by the measurement item list generation unit 400 onto an Excel test report.

Furthermore, the output storage section 623 stores the measurement item list output by the mapping cell output section 621 or the automatic cell output section 622 on an Excel test report.

Lastly, the component for outputting a test report includes a test report storage unit 700.

More specifically, the test report storage unit 700 stores an Excel test report mapped through the mapping unit 600.

At this time, when saving the Excel test report, the original may be saved as it is or saved as a different name.

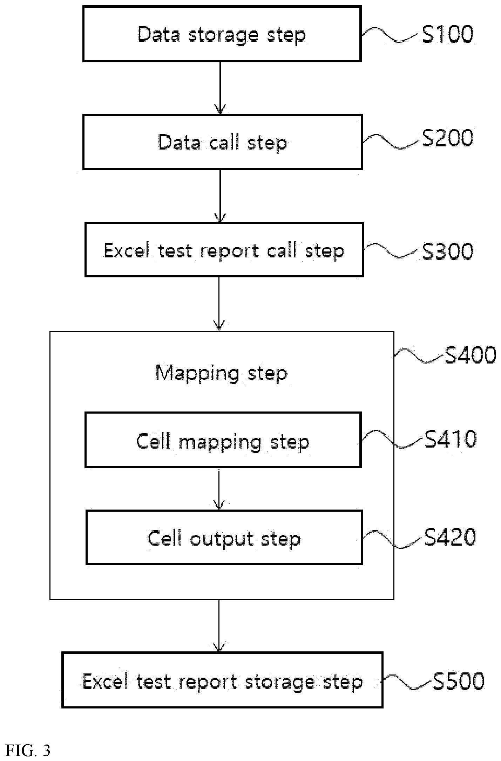

FIG. 3 is a block diagram showing a document conversion method for electronic test report management according to a preferred embodiment of the present disclosure.

Referring to FIG. 3, a document conversion method for electronic test report management according to a preferred embodiment of the present disclosure includes a data storage step S100 of storing data generated by a measuring device in a database, a data call step S200 of calling the data stored in the database, an Excel test report call step S300 of calling an Excel test report written as a test report, a mapping step S400 of mapping the data and the Excel test report, which are called in the data call step and the Excel test report call step, and a storage step S500 of storing the mapped data and Excel test report in the mapping step S400.

Meanwhile, FIG. 4 is a diagram showing a main screen of a program for building a document conversion system for electronic test report management according to a preferred embodiment of the present disclosure.

Prior to describing the document conversion method for electronic test report management according to a preferred embodiment of the present disclosure, a basic screen of the program will first be described as follows with reference to FIG. 4.

The present disclosure relates to an electronic test report management program implemented inside a computer of a test report writer, wherein the main screen includes a plurality of icons for performing preset functions based on the writer's input.

Here, the plurality of icons are preferably arranged at an upper part of the screen, and a function execution section for mapping is preferably arranged at a right part thereof.

Furthermore, a display window is arranged in which the Excel test report is displayed on a lower side of the upper part where the plurality of icons are arranged, and on a left side of the function execution section arranged at the right part.

More specifically, the plurality of icons arranged at the upper part of the screen refer to icons related to the collection of data and the output of a test report, which may include a start file conversion icon, an import database icon, a list measurement value icon, an import Excel file icon, a save Excel file icon, a save Excel file as icon, a close Excel file icon, a preferences icon, and the like.

Furthermore, a function execution section located at a right part of the screen is used to arrange icons related to the mapping of a test report, wherein an Excel setting section in which a cell setting section and a cell output section are arranged, and a chart section in which data called from a database is charted are arranged.

Here, a measurement item list that displays the data called from the database is displayed at an upper part where the Excel setting section and the chart section are arranged.

Furthermore, a plurality of icons arranged at an upper part of the screen will be described.

First, the start file conversion icon is used to convert data stored in an installation file where the program is installed and store the converted data in the database.

Furthermore, the import database icon is used to import the converted file, that is, the result data.

Additionally, the list measurement value icon is configured to call a list of measurement values stored in a database, and confirm individual measurement values.

Next, the import Excel file icon is configured to import an Excel file written as a test report, and the save Excel file icon is configured to modify or rewrite the imported Excel file and then save it.

Furthermore, the save Excel file as icon is used to modify or rewrite, and then save the imported Excel file as a different name, and the close Excel file icon is configured to close an opened Excel file.

Additionally, the preferences icon is configured to set or change program preferences.

Next, a function execution section located at a right part of the screen will be described.

A measurement item list arranged at an upper right part of the screen displays data imported through the import database icon.

Here, the measurement item list may include a cell location, a number of items, an item description, a reference value, and the like.

Furthermore, at a lower part of the measurement item list, function buttons for mapping, outputting, and storing data and an Excel test report are arranged.

Returning back again, a document conversion method for electronic test report management according to a preferred embodiment of the present disclosure will be described as follows with reference to a program shown in FIG. 4.

The document conversion method for electronic test report management in the present disclosure includes a data storage step S100, a data call step S200, an Excel test report call step S300, a mapping step S400, and a storage step S500.

First, the data storage step S100 is a step of storing data generated by a measuring device in a database.

In particular, since the data generated by the measuring device is generated in a different format depending on the measuring device, it is converted into a TXT format using a separate program and stored.

Here, data in various formats generated by the measuring device may be generated in any one of the following formats: DOCX, DOC, RTF, XLSX, XLS, CSV, TXT, and HTML.

Here, data to be converted is placed in a folder generated when the program is installed, and the converted data is stored in the database when the start file conversion icon is clicked on a screen of the program.

In particular, when the start file conversion icon is clicked and executed, a separate window for uploading a file is executed, and when the execution is completed, a confirmation window regarding the converted file is displayed on the screen.

In this case, if the file conversion is successfully carried out, then the converted file will be saved in the OK folder in the backup folder of the database, and if the file conversion fails, then the unconverted file will be saved in the FAIL folder in the backup folder.

Next, the data call step S200, which is a step of calling data stored in the database, may call the data through the import database icon.

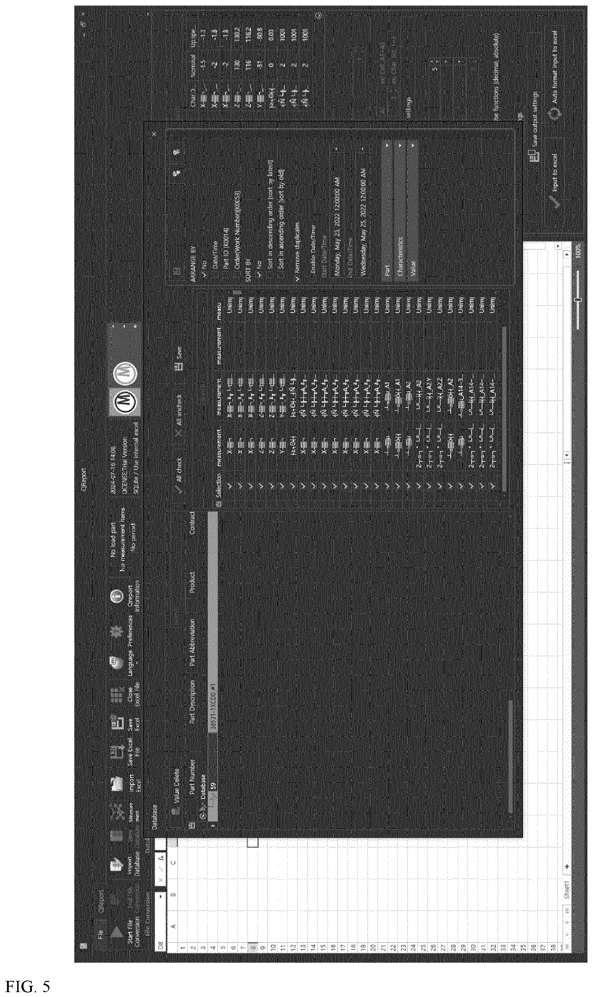

Upon clicking on the import data icon, a separate window may be displayed as shown in FIG. 5 to check the content of the converted file.

Here, when there are a plurality of stored data items, the user may select the data.

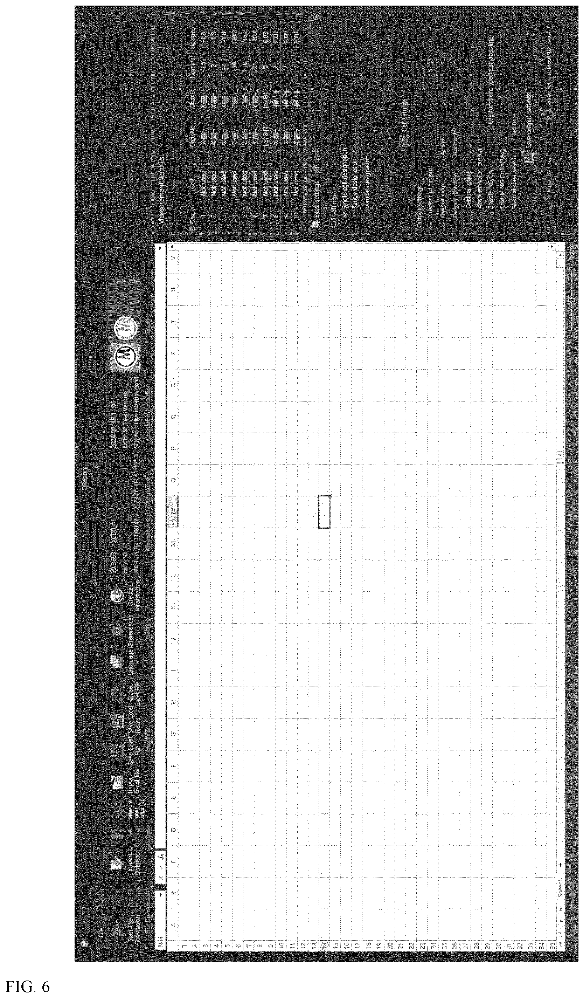

Meanwhile, when data stored in the database is selected, the selected data is displayed in the measurement item list on the basic screen as shown in FIG. 6.

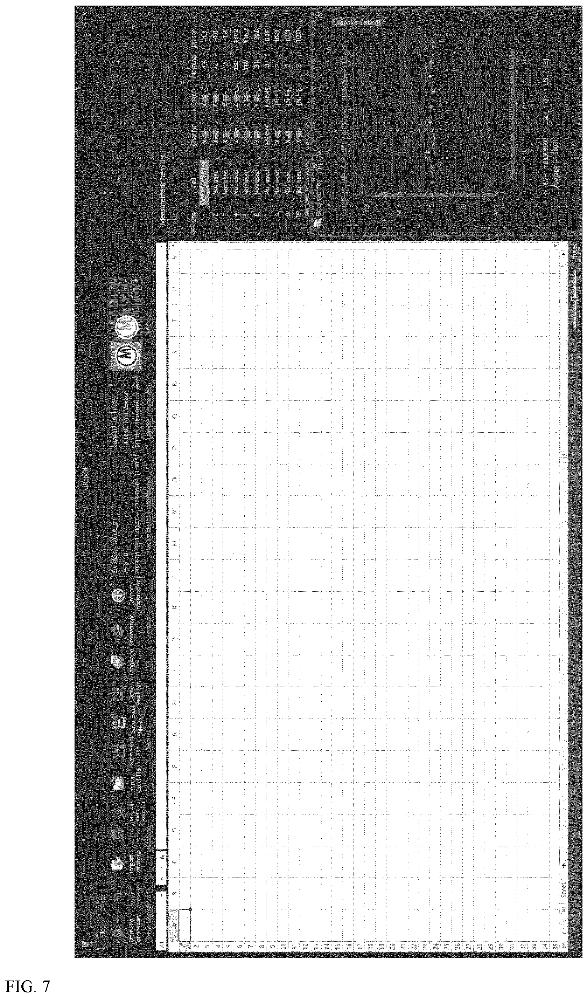

Meanwhile, when data is displayed on the measurement item list, the data may be charted and displayed on the screen as shown in FIG. 7.

Next, the Excel test report call step S300 is a step of calling an Excel test report written as a test report.

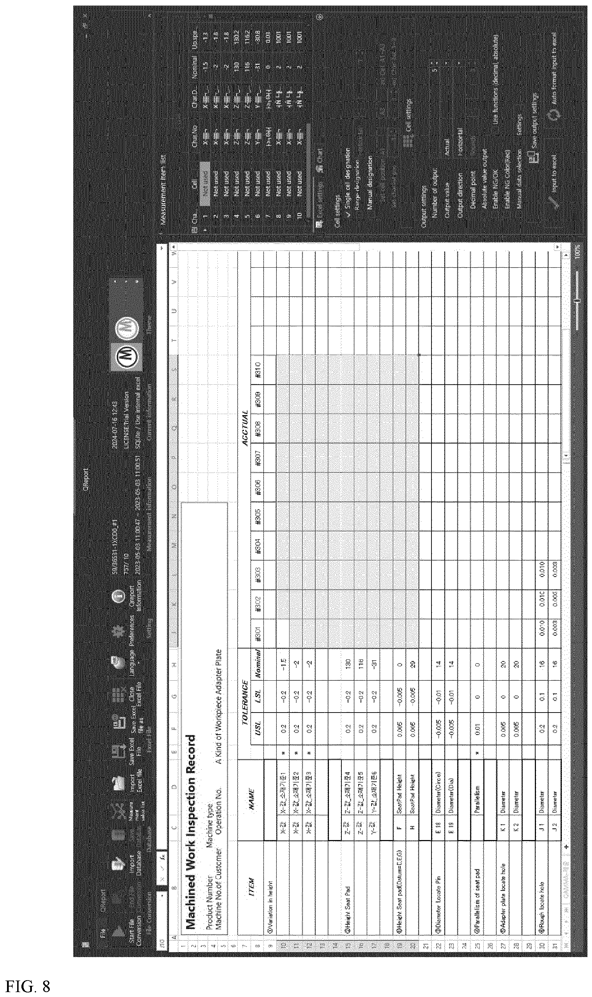

In the Excel test report call step S300, as shown in FIG. 8, the Excel test report written as a test report is called through the import Excel file icon.

Furthermore, the mapping step S400, which is a step of mapping the data and the Excel test report to each other, which are called in the data call step S200 and the Excel test report call step S300, includes a cell mapping step S410, and a cell output step S420.

In the cell mapping step S410, when a cell location is first designated in the Excel report, a cell location in sequence 1 on the measurement item list is designated, and then the cell setting button is clicked, the cell location in sequence 1 on the measurement item list is mapped to the cell location on the Excel test report.

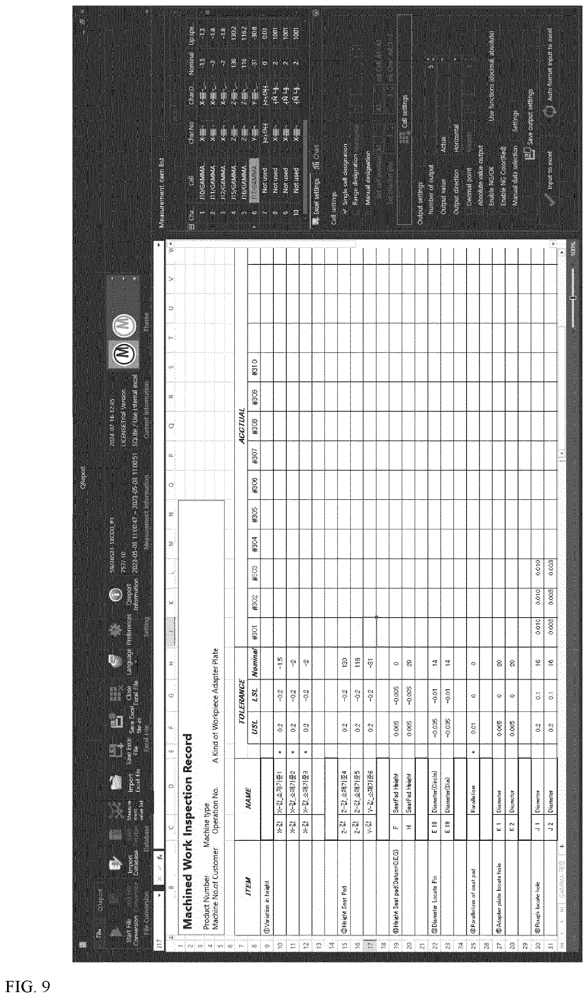

By repeating the above sequences, the cell locations on the Excel test report and the cell locations on the measurement item list are mapped to one another as shown in FIG. 9.

Meanwhile, though in a preferred embodiment of the present disclosure, a cell location on the Excel test report is first designated, a cell location on the measurement item list is designated, and then the cell setting button is clicked, even if a cell location on the measurement item list is first designated, a cell location on the Excel test report is designated, and then the cell settings button is clicked, the cell locations of the Excel test report and the measurement item list may also be mapped to one another.

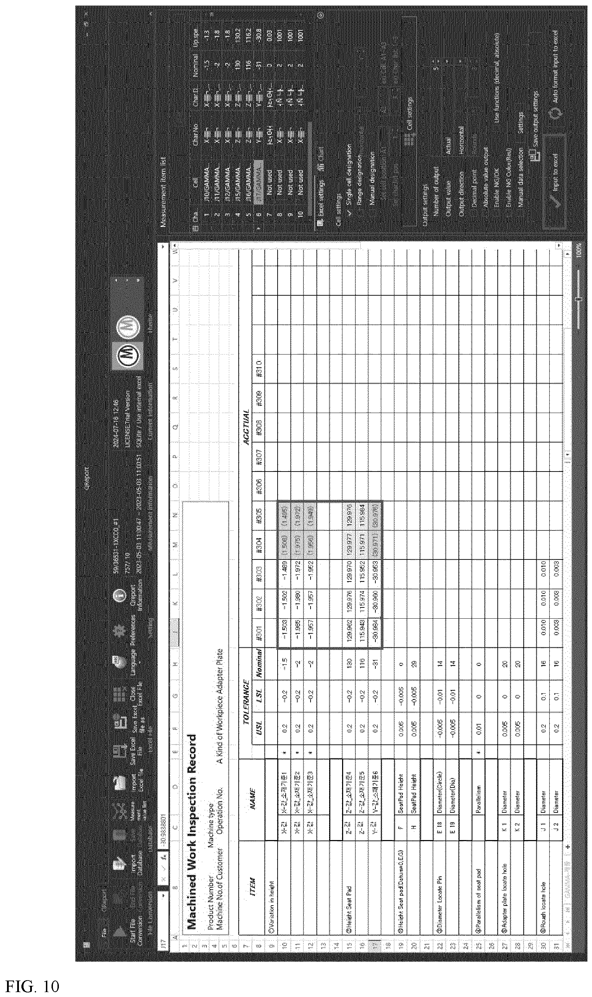

The cell output step S420 is a step for displaying the cell locations of the measurement item list in the Excel test report mapped in the cell mapping step S410, wherein upon clicking the output Excel input button, the data of the measurement item list is output onto the Excel test report in a state where the cell locations of the Excel test report and the cell locations of the measurement item list are mapped to one another as shown in FIG. 10.

Next, the storage step S500 is a step of storing the data and the Excel test report mapped to each other in the mapping step S400.

The mapped Excel test report may be saved through the save Excel file icon or the save Excel file as icon.

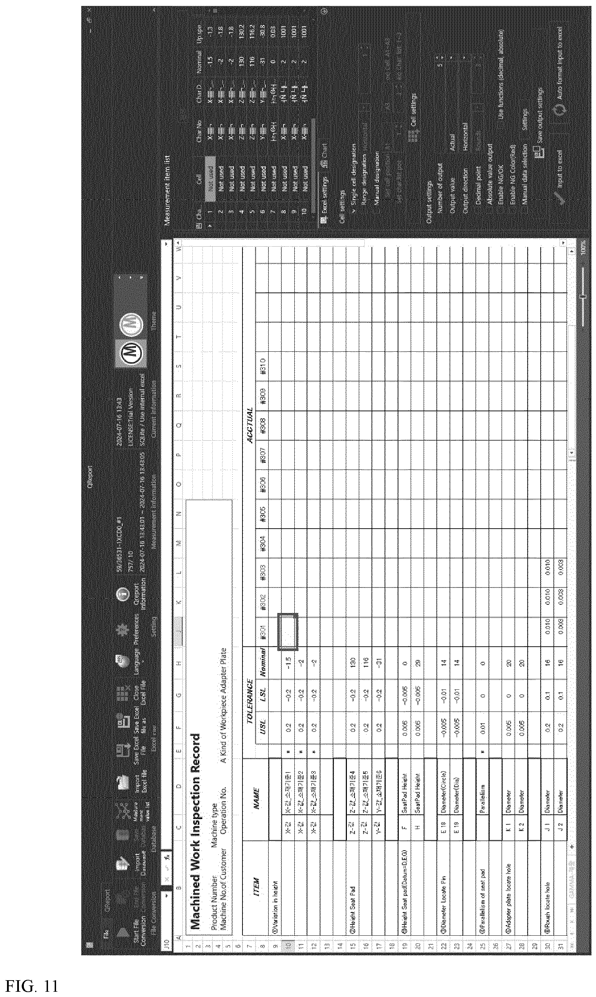

FIGS. 11 to 18 show the mapping step in detail.

FIGS. 11 to 17 are views showing the cell mapping step S410 in the mapping step S400.

Referring to FIGS. 11 to 17, the cell mapping step S410 is a step of mapping between data and an Excel test report through a cell setting section including a single cell designation section that individually maps the data to cells on the Excel test report, a range designation section provided to designate a cell range on the Excel test report to map the data, and a manual designation section provided to map data by directly inputting cell coordinates on the Excel test report.

Specifically, in consideration of a process of mapping between data and an Excel test report through the single cell designation section, a single cell designation portion is checked in the cell setting section.

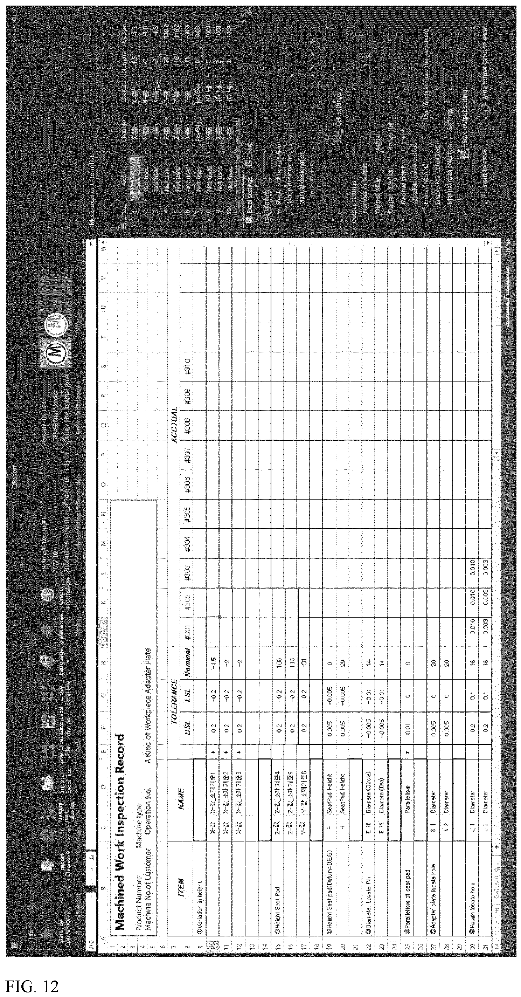

Then, a cell location on the Excel test report is designated as shown in FIG. 11, and a cell location in sequence 1 on the measurement item list is designated as shown in FIG. 12.

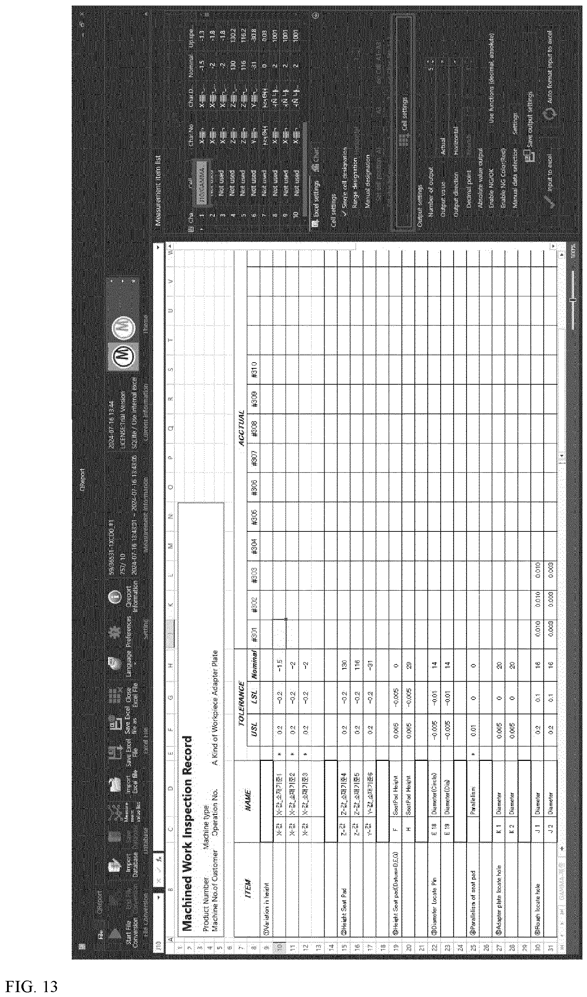

Subsequent to the completion of the designation of the cell location as shown in FIGS. 11 and 12, when the cell setting button is finally clicked, a cell location in sequence 1 of the measurement item list is mapped to a cell location on the Excel test report as shown in FIG. 13.

Furthermore, in consideration of a process of mapping data and an Excel test report to each other through the range designation section, a range designation portion is checked in the cell setting section.

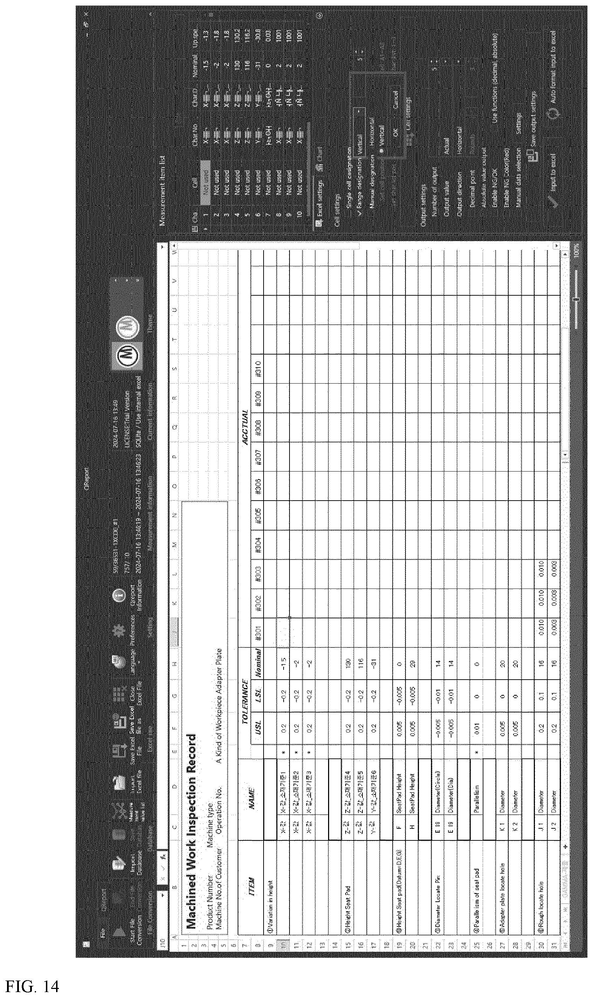

Then, as shown in FIG. 14, a horizontal or vertical direction of the cell is designated, and a number of the cells is designated.

In a preferred embodiment of the present disclosure, a direction of cells is designated to be vertical, and a number of cells is designated to be 5.

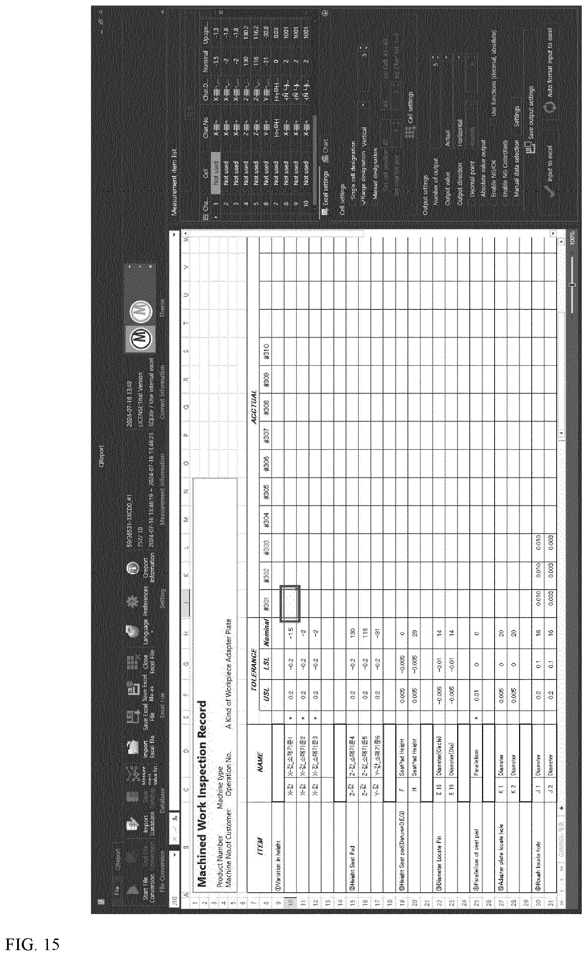

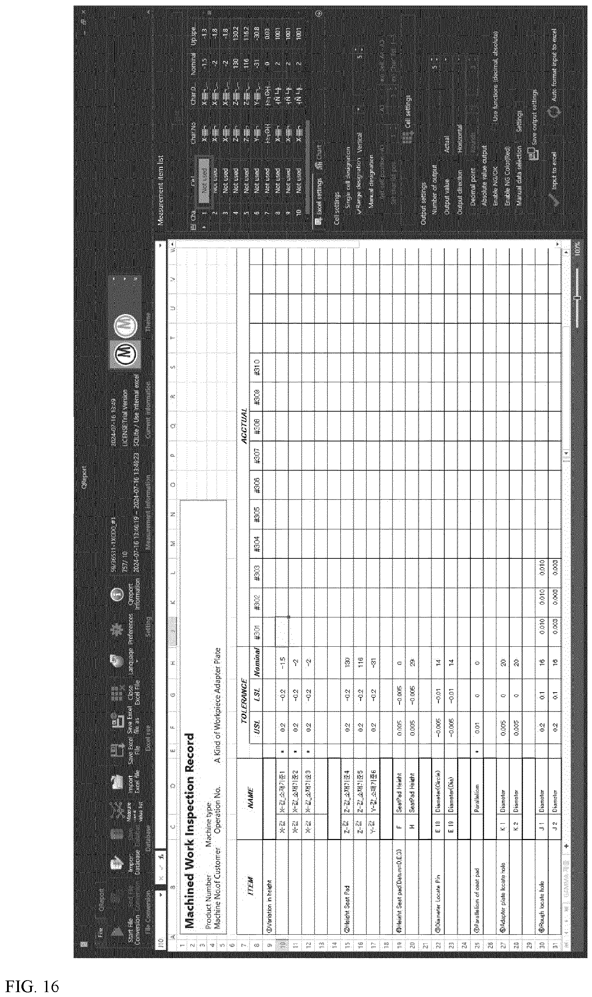

When the direction and number of cells are designated, a cell location on the Excel test report is designated as shown in FIG. 15, and a cell location in sequence 1 of the measurement item list is designated as shown in FIG. 16.

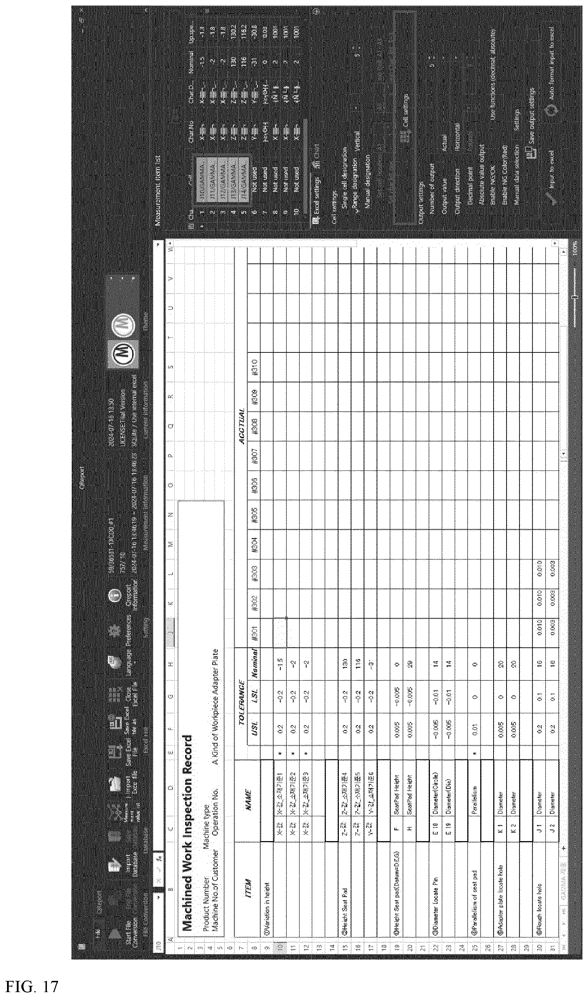

Subsequent to the completion of the designation of the cell location as shown in FIGS. 15 and 16, when the cell setting button is finally clicked, cell locations in sequences 1 to 5 of the measurement item list are mapped to cell locations on the Excel test report as shown in FIG. 17.

Furthermore, in consideration of a process of mapping data and an Excel test report to each other through the manual designation section, a manual designation portion is checked in the cell setting section.

A manual designation is used to directly input the coordinates of a cell, and configured to have a cell coordinate designation and a measurement item designation.

The cell coordinate designation is configured to directly input cell coordinates on the Excel test report, and the measurement item designation is configured to set a sequence on the measurement item list.

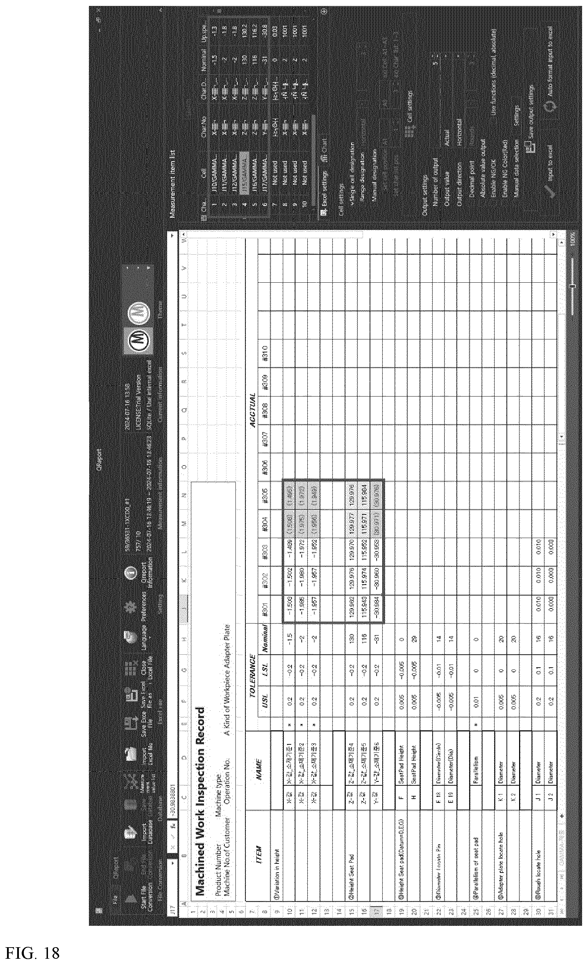

FIG. 18 is a view showing the cell output step S420.

Referring to FIG. 18, the cell output step S420 allows the data of a measurement item list to be output onto an Excel test report by a cell output section, the cell output section including a mapping cell output section that outputs data mapped by a cell setting section onto an Excel test report, and an automatic cell output section that outputs data onto an Excel test report.

The cell output section may set a number of output values, an output value, an output direction, and the like.

The number of output values is configured to, according to an output direction set on the Excel test report, set a number in the set direction.

The mapping cell output section performs a function by clicking on an output Excel input icon as shown in FIG. 4, wherein as shown in FIG. 18, data mapped by the cell mapping step S410, that is, a measurement item list, is output onto an Excel test report.

Furthermore, the automatic cell output section performs a function by clicking on an output Excel automatic input icon as shown in FIG. 4, wherein upon clicking the output Excel automatic input icon, all data in the measurement item list are output onto the Excel test report.

As described above, according to a document conversion system for electronic test report management according to the present disclosure, there is an effect of easily and quickly reporting data generated from a measuring device to an Excel test report.

In particular, data in various formats generated from a three-dimensional measuring device may be recognized to input the data into a database, and a user may be allowed to directly designate and input the data that is input into the database into his or her desired cells on an Excel test report, thereby providing an effective data management system.

In addition, it is configured to allow one-to-one mapping between a measurement item list and cells on an Excel test report to minimize confusion during data mapping and easily change settings through simple remapping even when cells are added or deleted, or their locations are moved, thereby providing convenience in use.

Furthermore, a measurement item list imported from a database may be provided in a chart, thereby effectively managing the lifespan and replacement cycle of the tools of the measuring device.

As described above, the present disclosure has been described with reference to the embodiments shown in the drawings, but those embodiments are merely illustrative, and it should be appreciated by those skilled in the art that various modifications and other embodiments equivalent thereto can be made from the foregoing detailed description.

Therefore, the true scope of the present disclosure must be determined by the technical concept of the patent claims.

### DESCRIPTION OF EMBODIMENTS

In order to achieve the foregoing objectives, there is provided a document conversion system for electronic test report management, the system including a data input unit 200 into which data generated from a measuring device is input; a data storage unit 300 that stores the data that is input into the data input unit 200 in a database; a measurement item list generation unit 400 that generates a measurement item list by calling data stored in the database; a test report generation unit 500 that calls an Excel test report for mapping to the measuring item list generated by the measurement item list generation unit 400; a mapping unit 600 that maps data called by the measurement item list generation unit to cells on the Excel test report called by the test report generation unit 500; and a test report storage unit 700 that stores the Excel test report mapped through the mapping unit 600.

In such a document conversion system for electronic test report management according to the present disclosure, the mapping unit 600 may include a cell setting section 610 that maps values of the measurement item list to cells of the Excel test report; and a cell output section 620 that outputs the values of the measurement item list mapped by the cell setting section 610 onto the Excel test report.

Furthermore, in the document conversion system for electronic test report management according to the present disclosure, the cell setting section 610 may include a single cell designation section 611 that individually maps the values of the measurement item list to the cells on the Excel test report; a range designation section 612 provided to designate a cell range on the Excel test report to map the values of the measurement item list; and a manual designation section 613 provided to directly input cell coordinates on the Excel test report to map the values of the measurement item list thereto.

In addition, in the document conversion system for electronic test report management according to the present disclosure, the range designation section 612 may set the output direction and number of the cells on the Excel test report.

In such a document conversion system for electronic test report management according to the present disclosure, the cell output section 620, when outputting the values of the measurement item list mapped by the cell setting section 610 onto the Excel test report, may set and output the output direction and number of the cells on the Excel test report.

Furthermore, in the document conversion system for electronic test report management according to the present disclosure, the cell output section 620 may include a mapping cell output section 621 that outputs the values of the measurement item list mapped by the cell setting section 610 onto the Excel test report; and an automatic cell output section 622 that outputs the entire measurement item list generated by the measurement item list generation unit 400 onto the Excel test report.

In addition, in the document conversion system for electronic test report management according to the present disclosure, the cell output section 620 may include an output storage section 623 that stores the measurement item list that is output by the mapping cell output section 621 or the automatic cell output section 622 on the Excel test report.

In such a document conversion system for electronic test report management according to the present disclosure, the measurement item list generation unit 400 may chart the measurement item list imported from the database.

Furthermore, in a document conversion method for electronic test report management may include a data storage step S100 of storing data generated by a measuring device in a database; a data call step S200 of calling data stored in the database; an Excel test report call step S300 of calling an Excel test report written as a test report; a mapping step S400 of mapping between the data and the Excel test report, which are called in the data call step S200 and the Excel test report call step S300; and a step S500 of storing the mapped data and Excel test report in the mapping step S400.

In addition, in the document conversion system for electronic test report management according to the present disclosure, the mapping step S400 may include a cell mapping step S410 of mapping between data and an Excel test report by a cell setting section including a single cell designation section that individually maps the data to cells on the Excel test report, a range designation section provided to designate a cell range on the Excel test report to map the data, and a manual designation section provided to map the data on the Excel report by directly inputting cell coordinates; and a cell output step S420 of outputting and storing the mapped data and Excel test report through a cell output section including a mapping cell output section that outputs the data mapped by the cell setting section onto the Excel test report and an automatic cell output section that outputs the data onto the Excel test report.

### INDUSTRIAL APPLICABILITY

As described above, according to a document conversion system and method for electronic test report management according to the present disclosure, it is expected to be widely used in the industry because there is an effect widely used easily and quickly reporting data generated from a measuring device to an Excel test report.

In particular, it is expected to be widely used in the industry because data in various formats generated from a three-dimensional measuring device can be recognized to input the data into a database, and a user can be allowed to directly designate and input the data that is input into the database into his or her desired cells on an Excel test report so as to provide an effective data management system.

In addition, it is expected to be widely used in the industry because it is configured to allow one-to-one mapping between a measurement item list and cells on an Excel test report to minimize confusion during data mapping and easily change settings through simple remapping even when cells are added or deleted, or their locations are moved so as to provide convenience in use.

Furthermore, it is expected to be widely used in the industry because a measurement item list imported from a database can be provided in a chart so as to effectively manage the lifespan and replacement cycle of the tools of the measuring device.

## Claims

1. A document conversion system for electronic test report management, the system comprising:
a data input unit 200 into which data generated from a measuring device is input;
a data storage unit 300 that stores the data that is input into the data input unit 200 in a database;
a measurement item list generation unit 400 that generates a measurement item list by calling data stored in the database;
a test report generation unit 500 that calls an Excel test report for mapping to the measuring item list generated by the measurement item list generation unit 400;
a mapping unit 600 that maps data called by the measurement item list generation unit to cells on the Excel test report called by the test report generation unit 500; and
a test report storage unit 700 that stores the Excel test report mapped through the mapping unit 600.

2. The system of claim 1, wherein the mapping unit 600 comprises:
a cell setting section 610 that maps values of the measurement item list to cells of the Excel test report; and
a cell output section 620 that outputs the values of the measurement item list mapped by the cell setting section 610 onto the Excel test report.

3. The system of claim 2, wherein the cell setting section 610 comprises:
a single cell designation section 611 that individually maps the values of the measurement item list to the cells on the Excel test report;
a range designation section 612 provided to designate a cell range on the Excel test report to map the values of the measurement item list; and
a manual designation section 613 provided to directly input cell coordinates on the Excel test report to map the values of the measurement item list thereto.

4. The system of claim 3, wherein the range designation section 612 sets the output direction and number of the cells on the Excel test report.

5. The system of claim 3, wherein the cell output section 620, when outputting the values of the measurement item list mapped by the cell setting section 610 onto the Excel test report, sets and outputs the output direction and number of the cells on the Excel test report.

6. The system of claim 5, wherein the cell output section 620 comprises:
a mapping cell output section 621 that outputs the values of the measurement item list mapped by the cell setting section 610 onto the Excel test report; and
an automatic cell output section 622 that outputs the entire measurement item list generated by the measurement item list generation unit 400 onto the Excel test report.

7. The system of claim 6, wherein the cell output section 620 comprises an output storage section 623 that stores the measurement item list that is output by the mapping cell output section 621 or the automatic cell output section 622 on the Excel test report.

8. The system of claim 1, wherein the measurement item list generation unit 400 charts the measurement item list imported from the database.

9. A document conversion method for electronic test report management, the method comprising:
a data storage step S 100 of storing data generated by a measuring device in a database;
a data call step S200 of calling data stored in the database;
an Excel test report call step S300 of calling an Excel test report written as a test report;
a mapping step S400 of mapping between the data and the Excel test report, which are called in the data call step S200 and the Excel test report call step S300; and
a step S500 of storing the mapped data and Excel test report in the mapping step S400.

10. The method of claim 9, wherein the mapping step S400 comprises:
a cell mapping step S410 of mapping between data and an Excel test report by a cell setting section including a single cell designation section that individually maps the data to cells on the Excel test report, a range designation section provided to designate a cell range on the Excel test report to map the data, and a manual designation section provided to map the data on the Excel report by directly inputting cell coordinates; and
a cell output step S420 of outputting and storing the mapped data and Excel test report through a cell output section including a mapping cell output section that outputs the data mapped by the cell setting section onto the Excel test report and an automatic cell output section that outputs the data onto the Excel test report.
